# EUROPÄISCHE PATENTSCHRIFT

(11) **EP 3 874 235 B1**
(45) Veröffentlichungstag und Bekanntmachung des Hinweises auf die Patenterteilung: **06.07.2022**
(21) Anmeldenummer: 20702070.2
(22) Anmeldetag: 10.01.2020
(51) Int. Cl.: G01D 21/00

(54) **VERWENDUNG EINER SENSORSYSTEMANORDNUNG IM BAUBEREICH UND/ODER BAUGEWERBE**
USE OF A SENSOR SYSTEM ARRANGEMENT IN THE BUILDING SECTOR AND/OR CONSTRUCTION INDUSTRY
UTILISATION D'UN SYSTÈME DE CAPTEURS DANS LE SECTEUR DE LA CONSTRUCTION ET/OU DU BÂTIMENT

(30) Priorität: 30.01.2019 DE 102019000605
(43) Veröffentlichungstag der Anmeldung: 08.09.2021
(73) Patentinhaber: EWALD DÖRKEN AG, 58313 Herdecke (DE)
(72) Erfinder: SAND, Henning, 44287 Dortmund (DE)
(74) Vertreter: Weidener, Jörg Michael
(86) Internationale Anmeldenummer: PCT/EP2020/050488
(87) Internationale Veröffentlichungsnummer: WO 2020/156776

(56) Entgegenhaltungen:
- DE-A1- 3 636 074
- DE-A1-102005 049 651
- DE-A1-102008 039 857
- US-A1- 2015 259 923

## Beschreibung

Die Erfindung betrifft eine Verwendung einer Sensorsystemanordnung im Baubereich und/oder Baugewerbe.

Sensorsystemanordnungen, die wenigstens einen Sensor bzw. ein Sensorelement aufweisen, sind im Stand der Technik bekannt. Gerade für einen Einsatz im Baubereich und/oder Baugewerbe zeichnen sich Sensoren dadurch aus, dass zum Beispiel kritische Parameter kontinuierlich oder diskontinuierlich überwachbar sind.

Als Verwendung im Baubereich und/oder Baugewerbe werden insbesondere alle Verwendungen verstanden, die mit einem Bau eines Gebäudes, einer Anlage oder dergleichen einhergehen und/oder die die Instandhaltung von Gebäuden betreffen.

Bei den bekannten Sensorsystemen wird eine externe Energie- und/oder Spannungsversorgung benötigt. Diese Energieversorgung kann durch einen Akkumulator oder eine Batterie bereitgestellt werden. Zudem ist auch bekannt, dass die Sensoren untereinander und zusätzlich mit einer externen Energieversorgungseinrichtung verkabelt sind.

Bei Entfall einer Verkabelung mit einer extern angeordneten Energieversorgungseinrichtung weisen die Sensoren eine beschränkte Lebensdauer auf, die von der jeweiligen Verwendung des Sensors und seiner Betriebszeit abhängig ist.

Gerade beim Einsatz im Baubereich und/oder im Baugewerbe sind die bekannten Sensorsystemanordnungen mit einer Vielzahl von Nachteilen behaftet. So müssen die Sensoren und/oder deren Energieversorgung üblicherweise regelmäßig, insbesondere jährlich, gewechselt und/oder gewartet werden. Ist aufgrund der Einbausituation des Sensors eine derartige Wartung nicht möglich, ist der Sensor nur für einen beschränkten Zeitraum nutzbar.

Eine Verkabelung der Sensoren mit einer externen Energieversorgungseinrichtung ist nicht nur aufwendig, sondern auch sehr kostenintensiv - und zwar sowohl aufgrund der Installation als solcher als auch im Hinblick auf die Betriebskosten, die aus dem Energieverbrauch oder aus der benötigten Wartung resultieren.

In Anbetracht von wirtschaftlichen Aspekten und/oder der beschränkten Lebensdauer der Sensoren wird derzeit zumeist von einem Einsatz von Sensorsystemen im Baubereich und/oder Baugewerbe Abstand genommen, da dies letztlich nicht rentabel umgesetzt werden kann.

Die US 2015/0259923 A1 offenbart eine Vorrichtung mit Sensoren zur Prüfung der Wasserdichtigkeit einer Dachbedeckung.

Die DE 10 2008 039 857 A1 offenbart ein Verfahren zur Detektion von Feuchte in wärmegedämmten metallischen Dachkonstruktionen.

Die DE 10 2008 039 857 A1 offenbart eine Anordnung zum Messen der Feuchte auf Oberflächen und Verfahren zur Herstellung derselben.

Die DE 36 36 074 A1 offenbart ein Kontroll- und Meldesystem zur Erkennung von eindringendem Wasser in Gebäuden.

Aufgabe der vorliegenden Erfindung ist es, die vorgenannten Nachteile zu vermeiden und/oder zumindest im Wesentlichen zu reduzieren.

Die vorgenannte Aufgabe wird erfindungsgemäß durch die Verwendung einer Sensorsystemanordnung im Baubereich und/oder Baugewerbe mit den Merkmalen des Anspruchs 1 gelöst.

Die Sensorsystemanordnung weist erfindungsgemäß wenigstens ein Sensorelement zur Detektion wenigstens einer physikalischen und/oder chemischen Größe und/oder zur Detektion der stofflichen Beschaffenheit seiner Umgebung und eine elektrische Energieversorgungseinrichtung auf. Letztlich versteht es sich, dass bevorzugt die elektrische Energieversorgungseinrichtung auch zur Spannungsversorgung des Sensorelements nutzbar ist. Zudem kann die Sensorsystemanordnung auch eine Mehrzahl von Sensorelementen aufweisen, die sich insbesondere voneinander unterscheiden können.

Die elektrische Energieversorgungseinrichtung weist ein elektrisches Energiespeichermittel und ein drahtlos und/oder kontaktlos aufladbares Energieempfangsmittel auf. Das Energieempfangsmittel ist durch eine drahtlose und/oder kontaktlose Energieübertragung aufladbar. In diesem Zusammenhang versteht es sich, dass das Energieempfangsmittel insbesondere mittels einer Energieübertragung durch bzw. mittels eines elektromagnetischen Strahlungsfeldes versorgbar ist.

Die durch die drahtlose und/oder kontaktlose Energieübertragung aufgenommene, insbesondere elektrische, Energie kann als, insbesondere elektrische, Energie von dem Energieempfangsmittel an das Energiespeichermittel übertragbar sein. Das Energiespeichermittel empfängt insbesondere eine elektrische Energie. Die elektrische Energie kann in dem Energiespeichermittel speicherbar sein. Von dem Energiespeichermittel kann die elektrische Energie elektrisch an das Sensorelement übertragbar sein.

Die erfindungsgemäße Verwendung zeichnet sich insbesondere dadurch aus, dass ein effizienter Einbau einer Sensorsystemanordnung im Baubereich und/oder Baugewerbe, vorzugsweise für schwer erreichbare oder gar nicht zugängliche Bereiche, ermöglicht wird. Insbesondere eignet sich die erfindungsgemäße Sensorsystemanordnung zur Verwendung im Dachbereich eines Gebäudes. Selbst im verbauten, insbesondere nicht zerstörungsfrei zugänglichen, Zustand der Sensorsystemanordnung kann eine elektrische Energieversorgung der Sensorsystemanordnung, insbesondere des Sensorelementes, durch die erfindungsgemäße drahtlose und/oder kontaktlose Energieübertragung ermöglicht werden.

Demzufolge kann erfindungsgemäß sichergestellt werden, dass das Sensorelement auch für einen langfristigen Einsatz, vorzugsweise über mehrere Jahre bis Jahrzehnte, mit elektrischer Energie versorgbar ist, wobei hierfür nicht die für diesen Zeitraum benötigte Gesamtenergiemenge der elektrischen Energie von dem Energiespeichermittel gespeichert werden muss.

Erfindungsgemäß ist sowohl eine kontinuierliche als auch eine diskontinuierliche Messung einer physikalischen und/oder chemischen Größe, insbesondere in zeitlich festgelegten Abständen und/oder Intervallen, durch das Sensorelement möglich.

Darüber hinaus gelingt es der vorliegenden Erfindung, einen kostengünstigen Einbau der Sensorsystemanordnung im Baubereich und/oder Baugewerbe bereitzustellen, wobei gleichzeitig auch ein langfristiger Einsatz ermöglicht werden kann. Somit zeigt sich aus ökonomischen Gründen die Nutzung der Sensorsystemanordnung als vorteilhaft. Durch die somit ermöglichte rentable Überwachung von verschiedenen, insbesondere kritischen, Größen im Baubereich und/oder Baugewerbe kann ein Eingreifen bei Überschreitung einer festgelegten Grenze, insbesondere der kritischen Größe, sichergestellt werden, so dass dauerhafte und/oder konstenintensive Beschädigungen durch eine Überwachung der Zustandsgrößen reduziert werden können.

Gerade nach Abschluss der Bauarbeiten ist es im Stand der Technik nicht möglich, für verbaute Sensorsystemanordnungen einen Wechsel der Energiespeichermittel, insbesondere bei einem entladenen Energiespeichermittel, ohne eine Beschädigung der Bausubstanz zu gewährleisten. Erfindungsgemäß kann dies durch eine drahtlose und/oder kontaktlose Aufladung des Energieempfangsmittels, das mit dem Energiespeichermittel zusammenwirkt, vermieden werden.

Bei einer besonders bevorzugten Ausführungsform der vorliegenden Erfindung ist vorgesehen, dass zur drahtlosen und/oder kontaktlosen elektrischen Energieübertragung eine induktive Energieübertragung vorgesehen ist. Alternativ oder zusätzlich kann vorgesehen sein, dass eine drahtlose und/oder kontaktlose elektrische Energieübertragung im Nahfeld erfolgt bzw. vorgesehen ist.

Als drahtlose und/oder kontaktlose Energieübertragung kann auch eine kabellose und/oder kontaktlose Leistungsübertragung verstanden werden. Letztlich wird elektrische Energie berührungslos von einem Objekt auf ein anderes übertragen. Eine elektrische Übertragung erfolgt nicht entlang elektrischer Leitungen und mittels elektrischer Kontakte, sondern durch nicht drahtgebundene elektomagnetische Felder.

Die induktive Energieübertragung zeichnet sich durch einen vergleichsweisen hohen Wirkungsgrad, bevorzugt von über 50 %, weiter bevorzugt von über 60 %, vorzugsweise zwischen 60 % bis 90 %, aus.

Eine drahtlose Energieübertragung im Nahfeld kann als nichtstrahlende Kopplung bezeichnet werden. Zu einer derartigen drahtlosen Energieübertragung kann die induktive Kopplung basierend auf dem magnetischen Fluss gezählt werden. Als induktive Kopplung ist vorzugsweise eine induktive Energieübertragung vorgesehen. Eine Nahfeldkopplung ist auf kurze Distanzen im Bereich einiger Zentimeter, vorzugsweise im Bereich von 0,1 cm bis 50 cm, beschränkt.

Für die induktive Energieübertragung kann eine die elektrische Energie aussendende Energiesendereinrichtung vorgesehen sein, die insbesondere extern bzw. räumlich getrennt von der Sensorsystemanordnung angeordnet ist und vorzugsweise nur zur Aufladung des Energiespeichermittels mittels des Energieempfangsmittels im Bereich bzw. im Nahfeld des Energieempfangsmittels angeordnet ist. Insbesondere wird in der Energiesendereinrichtung mittels eines Oszillators ein magnetisches Wechselfeld erzeugt. Die Übertragung erfolgt mittels der Gegeninduktion zwischen zwei Spulen, wobei eine Spule der Energiesendeeinrichtung mit einer weiteren Spule des Energieempfangsmittels (Induktionsempfängerspule) zusammenwirkt. In der Empfängerspule wird durch den Wechselstrom in der Senderspule eine Wechselspannung induziert, wobei gegebenenfalls eine Gleichrichtung und eine weitere Verwendung als Gleichspannung im Anschluss an die Übertragung erfolgt.

Vorzugsweise ist ein Abstand zwischen einer die elektrische Energie aussendenden Energiesendeeinrichtung und dem Energieempfangsmittel kleiner als 30 cm, bevorzugt kleiner 10 cm, weiter bevorzugt kleiner als 5 cm vorgesehen. Alternativ oder zusätzlich kann vorgesehen sein, dass der Abstand größer als 0,1 cm, bevorzugt größer als 1 cm, weiter bevorzugt größer als 2 cm, ausgebildet ist und/oder zwischen 0,1 cm bis 30 cm, bevorzugt zwischen 1 cm bis 10 cm, weiter bevorzugt zwischen 2 cm bis 5 cm, liegt.

Die induktive Kopplung bzw. die induktive Energieübertragung kann insbesondere auf bekannten Industriestandards, die vorzugsweise genormt sind, basieren. Weiter bevorzugt ist eine induktive Energieübertragung basierend auf dem Qi-Standard vorgesehen. Als Qi-Standard ist insbesondere ein proprietärer Standard zur drahtlosen Energieübertragung mittels elektromagnetischer Induktion über kurze Distanzen zu verstehen, der beispielsweise für die Interoperabilität bei Ladegeräten vorgesehen ist. Bekannt ist der Qi-Standard zur Aufladung beispielsweise verschiedener Mobiltelefone und anderer Kleingeräte über dafür vorgesehene Ladestationen. Aber auch andere Industriestandards sind zur Normung der induktiven Energieübertragung erfindungsgemäß möglich.

Bei einer weiteren besonders bevorzugten Ausführungsform ist vorgesehen, dass das Energieempfangsmittel, wie vorstehend erläutert, eine Induktionsempfängerspule aufweist. Alternativ oder zusätzlich kann vorgesehen sein, dass das Energieempfangsmittel derart ausgebildet ist, dass es drahtlos und/oder kontaktlos, insbesondere durch Übertragung von elektrischer Energie ausgehend von der Energiesendeeinrichtung, aufladbar ist. Die erfindungsgemäße Energieübertragung ermöglicht, dass die Sensorsystemanordnung auch im verbauten und insbesondere schwer zugänglichen Einbauzustand mit elektrischer Energie versorgbar ist, wobei die Energiesendeeinrichtung nicht unmittelbar über elektrische Leitungen mit dem Energieempfangsmittel verbunden sein muss.

Bei einer weiteren bevorzugten Ausführungsform des Erfindungsgedankens ist das Sensorelement durch die von dem Energiespeichermittel übertragene elektrische Energie versorgbar. Vorzugsweise erfolgt eine elektrische Energieversorgung des Sensorelementes ausschließlich durch Energiezuführung von dem Energiespeichermittel. Letztlich kann das Sensorelement zur Erfassung einer physikalischen und/oder chemischen Größe mit elektrischer Energie versorgt werden.

Vorzugsweise kann das Sensorelement, bevorzugt ausschließlich, dann aktiviert werden, wenn eine Veränderung der überwachten Größen, insbesondere bei Überschreitung eines festgelegten Bereiches und/oder eines Grenzwertes, stattfindet. Bis dahin kann sich das Sensorelement in einem sogenannten "Schlafmodus" bzw. "Sleep"-Modus befinden. Ferner kann vorgesehen sein, dass das Sensorelement in, insbesondere festgelegten und/oder vorgegebenen, zeitlichen Abständen die zu überwachende(n) Größe(n) erfasst. Letztlich wird die Ausbildung des Sensorelementes entsprechend der überwachten Größe und/oder des Einsatzortes, insbesondere der sich daraus ergebenden Anforderungen an das Sensorelement, ausgebildet.

Eine elektrische Energieversorgung schließt in diesem Zusammenhang nicht zwingend aus, dass das Sensorelement bei Erfassung der physikalischen und/oder chemischen Größe aufgrund des Messprinzips Energie in elektrische Energie umwandelt und diese insbesondere zur Messung und/oder zur Übertragung der erfassten Informationen nutzt bzw. verwendet.

Vorzugsweise weist das Energiespeichermittel einen Akkumulator auf, insbesondere kann das Energiespeichermittel aus einem Akkumulator bestehen. Der Akkumulator kann flexibel und/oder wiederaufladbar ausgebildet sein. Als Akkumulator kann ein wiederaufladbarer Speicher für elektrische Energie auf elektrochemischer Basis verstanden werden. Insbesondere kann der Akkumulator elektrisch zusammengeschaltete Sekundärzellen aufweisen, wobei als Sekundärzelle ein einzelnes Speicherelement verstanden werden kann, das insbesondere im Gegensatz zur nicht oder begrenzt wiederaufladbaren Primärzelle wiederaufladbar ausgebildet ist.

Alternativ oder zusätzlich kann vorgesehen sein, dass das Energiespeichermittel eine Batterie aufweist und/oder daraus besteht, insbesondere wobei als Batterie eine Kombination mehrerer gleichartiger galvanischer Zellen bzw. Elemente, die in Reihe zusammengeschaltet sind, vorgesehen ist.

Ein flexibler Akkumulator und/oder ein flexibles Energiespeichermittel ist insbesondere vorteilhaft zur Anordnung der Sensorsystemanordnung auf einen, insbesondere unebenen, Untergrund vorgesehen, so dass ein Verbiegen und/oder ein Knicken des Energiespeichermittels und/oder des Akkumulators zur Anpassung an den Untergrund sichergestellt werden kann. Durch eine flexible Ausbildung des Energiespeichermittels und/oder des Akkumulators kann letztlich eine vereinfachte Handhabung der Sensorsystemanordnung, insbesondere beim Einbau, ermöglicht werden.

Gemäß einer weiteren bevorzugten Ausführungsform weist die Sensorsystemanordnung eine dem Sensorelement zugeordnete Sender- und/oder Empfängereinrichtung auf. Letztlich ist es auch möglich, dass die Sensorsystemanordnung sowohl eine Sendereinrichtung als auch eine Empfängereinrichtung aufweist, die voneinander räumlich getrennt angeordnet sein können, insbesondere wobei eine Kopplung zwischen der Sendereinrichtung und der Empfängereinrichtung für die weiteren Bestandteile der Sensorsystemanordnung ermöglicht werden kann.

Vorzugsweise kann die Sender- und/oder Empfängereinrichtung durch das Sensorelement und/oder das Energiespeichermittel mit elektrischer Energie versorgt werden.

Bevorzugt weist die Sender- und/oder Empfängereinrichtung eine elektromagnetische Strahlung aussendende und/oder empfangende Antenne auf. Letztlich kann die Sendereinrichtung eine elektromagnetische Strahlung aussendende und/oder die Empfängereinrichtung eine elektromagnetische Strahlung empfangende Antenne aufweisen. Insbesondere kann eine Antenne der vorgenannten Art im Hochfrequenz-Bereich der elektromagnetischen Strahlung arbeiten bzw. in einem derartigen Strahlungsband Strahlung aussenden und/oder empfangen. Der Hochfrequenz-Bereich kann auch als Radiofrequenz-Bereich (radio frequency) bezeichnet werden. In der Elektrotechnik wird als Hochfrequenz-Bereich insbesondere ein Frequenz-Bereich von 9 kHz bis zum langwelligen Licht - das heißt bis in den THz-Bereich - verstanden.

Vorzugsweise können die durch das Sensorelement erfassten Informationen, bevorzugt drahtlos, durch die Sender- und/oder Empfängereinrichtung, insbesondere durch die Sendereinrichtung, übertragbar sein, vorzugsweise an eine externe Empfangseinrichtung. Die externe Empfangseinrichtung kann letztlich räumlich getrennt von der Sensorsystemanordnung vorgesehen sein. Alternativ oder zusätzlich kann vorgesehen sein, dass Informationen von der Sender- und/oder Empfängereinrichtung, vorzugsweise drahtlos, empfangen werden, insbesondere wobei die Informationen von einer externen Sendereinrichtung, die räumlich getrennt von der Sensorsystemanordnung angeordnet sein kann, ausgesendet werden. Vorteilhafterweise können die von der externen Sendereinrichtung ausgesendeten Informationen an das Sensorelement, das Energiespeichermittel und/oder das Energieempfangsmittel und/oder an die Sensorsystemanordnung, bevorzugt zur Steuerung und/oder Regelung der vorgenannten Komponenten bzw. Bestandteile, übertragen werden.

Beispielsweise kann durch eine externe Sensoreinrichtung das Sensorelement zur Erfassung einer physikalischen und/oder chemischen Größe aktiviert werden. Alternativ oder zusätzlich ist es möglich, dass aufgrund der von der externen Sendereinrichtung übertragenen Informationen elektrische Energie von dem Energiespeichermittel an das Sensorelement, insbesondere zur dessen Aktivierung, übertragen wird. Letztlich kann durch die Sendereinrichtung und/oder die externe Empfängereinrichtung eine Kommunikation der Sendersystemanordnung mit externen Geräten ermöglicht werden, insbesondere so dass die von dem Sensorelement erfassten Informationen ausgewertet, verarbeitet und/oder zur Steuerung und/oder Regelung der Sensorsystemanordnung genutzt werden können.

Darüber hinaus ist erfindungsgemäß die Sensorsystemanordnung bei der Verwendung im Baubereich und/oder Baugewerbe zwischen zwei Schichten angeordnet sein. Die Sensorsystemanordnung ist zumindest mit einer Schicht fest und/oder nicht zerstörungsfrei trennbar und/oder untrennbar verbunden. Insbesondere kann die Sensorsystemanordnung an und/oder auf einer Untergrundschicht bzw. auf einem Untergrund und unterhalb einer Oberschicht, die zumindest teilweise oberhalb der Sensorsystemanordnung angeordnet ist, vorgesehen sein. Aufgrund einer derartigen Anordnung kann die Sensorsystemanordnung nicht unmittelbar kontaktierbar sein. Beispielsweise kann die Sensorsystemanordnung im Bereich einer Nasszelle, insbesondere auf einer Abdichtungsbahn, und/oder im Fassaden- und/oder Dachbereich, insbesondere auf einer Baufolie und/oder Dachbahn, angeordnet sein. Nach Abschluss der Bauarbeiten ist es aufgrund der vorgenannten Anordnung der Sensorsystemanordnung im Stand der Technik nicht mehr möglich, ohne Zerstörung wenigstens einer Schicht das Sensorelement und/oder das Energiespeichermittel mit elektrischer Energie zu versorgen.

Alternativ oder zusätzlich kann vorgesehen sein, dass die Sensorsystemanordnung auf und/oder an einem Verbindungsabschnitt, insbesondere einer Verbindungsabschnittsfolie, angeordnet ist, vorzugsweise fest mit dem Verbindungsabschnitt verbunden ist. Der Verbindungsabschnitt kann zur Anordnung, insbesondere mittels Verkleben, mit wenigstens einer weiteren Schicht, vorzugsweise einer Verbundfolie, dienen. Folglich kann letztlich der Verbindungsabschnitt gemeinsam mit der Sensorsystemanordnung als "Verbundfolien-Patch" und/oder "Sensor-Patch" angesehen werden. Erfindungsgemäß kann über den Verbindungsabschnitt eine einfache Anordnung der Sensorsystemanordnung an eine weitere Schicht ermöglicht werden.

Bei einer weiteren besonders bevorzugten Ausführungsform kann vorgesehen sein, dass die Sensorsystemanordnung, die Energieversorgungseinrichtung, das Sensorelement, das Energiespeichermittel, die Sender- und/oder Empfängereinrichtung, der Akkumulator, die Antenne, die Induktionsempfängerspule und/oder das Energieempfangsmittel auf wenigstens eine Trägerschicht aufgedruckt worden ist/sind. Als Trägerschicht kann insbesondere eine flexible und/oder elastische und/oder biegbare Trägerschicht vorgesehen sein. Besonders bevorzugt werden wenigstens zwei der vorgenannten Komponenten auf eine Trägerschicht aufgedruckt. Durch einen Druck der vorgenannten Komponenten ist es insbesondere sichergestellt, eine individuelle Ausgestaltung und/oder Anordnung der Komponenten auf der Trägerschicht zu ermöglichen. Darüber hinaus kann eine flexible bzw. biegbare Sendersystemanordnung bereitgestellt werden.

Grundsätzlich ist es auch möglich, unterschiedliche Komponenten auf unterschiedliche Trägerschichten zu drucken, wobei die vorgenannten Komponenten elektrisch miteinander verbunden sein können. Auch elektrische Leitungen zur Verbindung der vorgenannten Komponenten können auch auf der Trägerschicht aufgedruckt sein.

Vorzugsweise ist/sind die Sensorsystemanordnung, die Energieversorgungseinrichtung, das Sensorelement, das Energiespeichermittel, die Sender- und/oder Empfängereinrichtung, der Akkumulator, die Antenne, die Induktionsempfängerspule und/oder das Energieempfangsmittel mittels einer elektrolythaltigen und/oder metallaufweisenden Tinte gedruckt. Alternativ oder zusätzlich kann vorgesehen sein, dass eine elektrisch leitfähige Polymere aufweisende Tinte vorgesehen ist. Die Tinte, die vorzugsweise in einem Tampondruckverfahren eingesetzt wird, ist insbesondere in Abhängigkeit der jeweiligen Komponenten, die gedruckt werden, ausgebildet, so dass die gewünschten Eigenschaften der vorgenannten Komponenten gewährleistet werden. Letztlich ist bevorzugt eine elektrisch leitfähige Tinte vorgesehen, in der elektrische Energie speicherbar und/oder über die elektrische Energie übertragbar bzw. leitbar ist.

Weitere mögliche Druckverfahren sind das Tintenstrahldruckverfahren und/oder das Rolle-zu-Rolle-Druckverfahren.

Bei einer weiteren besonders bevorzugten Ausführungsform ist als Sensorelement ein Feuchtesensor zur Detektion von Feuchtigkeit und/oder ein Temperatursensor zur Detektion einer Temperatur vorgesehen. Grundsätzlich ist auch die Detektion von weiteren physikalischen und/oder chemischen Größen möglich.

Des Weiteren betrifft die vorliegende Erfindung eine Verbundfolie mit einer Sensorsystemanordnung nach einer der zuvor beschriebenen Ausführungsformen und mit wenigstens einer Folie, wobei die Sensorsystemanordnung mit der Folie verbunden ist.

Vorzugsweise ist die Sensorsystemanordnung fest bzw. untrennbar mit der Folie verbunden.

Es versteht sich, dass sich bevorzugte Ausführungsformen der erfindungsgemäßen Sensorsystemanordnung auch auf die erfindungsgemäße Verbundfolie übertragen lassen, so dass zur Vermeidung von unnötigen Wiederholungen auf die vorhergehenden Ausführungsformen und die damit einhergehenden Vorteile der Sensorsystemanordnung verwiesen werden darf.

Insbesondere kann vorgesehen sein, dass die Sensorsystemanordnung - wie zuvor ausgeführt - mit einem Verbindungsabschnitt fest verbunden ist. Der Verbindungsabschnitt wiederum kann mit der Verbundfolie, vorzugsweise fest, verbunden sein, insbesondere angeklebt sein.

Vorzugsweise wird die Verbundfolie zur Verwendung als Baufolie, insbesondere als Fassadenbahn, Dachbahn, Unterdachbahn, Unterdeckbahn und/oder Unterspannbahn, und/oder zur Verwendung als Abdichtungsfolie, bevorzugt in einer Nasszelle, vorgesehen.

Besonders bevorzugt ist, dass die Sensorsystemanordnung zumindest teilweise auf die Folie aufgedruckt worden ist.

Insbesondere kann die Sensorsystemanordnung in einer Gebäudehülle, bevorzugt im Fassaden- und/oder Dachbereich, eingesetzt werden.

Die Baufolie kann im verlegten Zustand als Teil einer Gebäudehülle und/oder in der Bauwirtschaft und/oder der Bautechnik verwendet werden. Zudem kann die Baufolie unterhalb, der Witterungsseite abgewandt, von einer Begrünung und/oder Pflanzsubstrat und/oder Schüttungen, insbesondere Kiesschüttungen, und/oder als Dampfbremse, insbesondere dem Innenraum eines Gebäudes zugewandt, und/oder als Fassadenbekleidung eingesetzt werden.

Hauptaufgabe von Baufolien bzw. Verbundfolie der vorgenannten Art ist es zumeist, eine Wasser- und Winddichtigkeit unter einer Hartbedachung und/oder unter einer Fassadenverkleidung sicherzustellen. Hierzu bedarf es einer wasser- und winddichten Baufolie und/oder Unterbedachung, die aus einer Mehrzahl von Streifen der Baufolie und/oder Unterbedachung hergestellt wird. Zur Herstellung wird die Baufolie als Bahnenware in Streifen auf dem Dach und/oder entlang einer Fassade, insbesondere in Art als Bestandteil einer Gebäudehülle, befestigt. Die einzelnen Reihen der Baufolienstreifen werden miteinander, insbesondere über eine Klebeverbindung, verbunden oder miteinander verschweißt. Durch die Verbindung der einzelnen Baufolienstreifen wird versucht, die notwendige Dichtigkeit zu gewährleisten.

Erfindungsgemäß kann durch die Sensoranordnung die Überwachung von physikalischen und/oder chemischen Größen über die Gebäudehülle und/oder Baufolie mit geringen Kosten ermöglicht werden.

Besonders bevorzugt weist die Abdichtungsfolie und/oder die Baufolie wenigstens eine Trägerschicht, insbesondere Vliesschicht, auf.

Als Vliesschicht bzw. eine als Vlies ausgebildete Schicht ist insbesondere ein Gebilde aus Fasern begrenzter Länge, Endlosfasern (Filamenten) und/oder geschnittenen Garnen jeglicher Art und jeglichen Ursprungs, die zu einem Vlies zusammengefügt und miteinander verbunden worden sind. Als Vliesstoff wird meist ein größtenteils flexibles textiles Flächengebilde verstanden, das leicht biegsam ist.

Vorzugsweise weist der Schichtaufbau der Verbundfolie und/oder die Verbundfolie und/oder die Folie wenigstens eine Funktionsschicht und wenigstens eine Trägerschicht auf. Die Funktionsschicht kann derart ausgebildet sein, dass die wesentlichen Funktionen der Verbundfolie, insbesondere die Wasserdichtigkeit, gewährleistet werden können. Die Trägerschicht kann zur Anordnung der Funktionsschicht und/oder weiterer Schichten vorgesehen sein. Zudem kann die Trägerschicht die Funktionsschicht und/oder die weiteren Schichten vor mechanischer Beanspruchung und/oder vor Sonneneinstrahlung schützen. Letztlich versteht es sich, dass in dem Schichtaufbau auch mehrere Funktionsschichten und/oder mehrere Trägerschichten vorgesehen sein können.

Bei einer weiteren bevorzugten Ausführungsform des Erfindungsgedankens ist vorgesehen, dass die Funktionsschicht diffusionsoffen, insbesondere wasserdampfdurchlässig, und/oder wasserdicht und/oder atmungsaktiv ausgebildet ist. Besonders bevorzugt ist die Funktionsschicht diffusionsoffen, wasserdicht sowie atmungsaktiv.

Eine diffusionsoffene Funktionsschicht kann durch Ausbildung als mikroporöse Membran erreicht werden. Bei einer mikroporösen Membran bleibt der Schutz vor Wasser und/oder Feuchtigkeit bestehen, weil Wassertropfen zu groß sind und aufgrund ihrer Oberflächenspannung nicht durch die Mikroporen - die zum Diffusionstransport vorgesehen sind - gelangen. Eine mikroporöse Membran kann aus einer diffusionsdichten Polypropylen-Folie und/oder Kunststofffolie hergestellt werden. Bei der Produktion bzw. der Herstellung der Folie kann zur Porenbildung ein Füllstoff, insbesondere Calciumkarbonat, zugegeben werden, wobei die Folie anschließend gestreckt bzw. gestretcht wird. Allerdings lässt sich die Mikroporösität der Membran auch durch andere Verfahren erzielen.

Besonders bevorzugt ist die, insbesondere als Dachfolie und/oder Unterdachbahn ausgebildete, Baufolie bzw. der mehrlagige Schichtaufbau wasserdicht, diffusionsoffen und/oder atmungsaktiv ausgebildet. Darüber hinaus kann die Baufolie auch winddicht ausgebildet sein, wobei die verlegten, miteinander verbundenen Reihen der Baufolie eine Unterbedachung bilden.

Alternativ oder zusätzlich kann bei einer ganz besonders bevorzugten Ausführungsform vorgesehen sein, dass die, vorzugsweise als Flachdachbahn und/oder Abdichtungsfolie für eine Nasszelle ausgebildete, Baufolie wassersperrend und/oder wasserdicht, diffusionsdicht, wasserdampfundurchlässig, dampfbremsend und/oder dampfsperrend ausgebildet ist.

Eine als Abdichtungsfolie für eine Nasszelle ausgebildete Baufolie zeigt den Vorteil, dass das Sensorelement sehr einfach kontaktlos mit Energie versorgbar ist, da es ohne großen Aufwand möglich ist, ins Nahfeld der Sensorsystemanordnung zu gelangen.

Insbesondere ist die Baufolie derart ausgebildet, dass oberhalb der Baufolie, der Witterungsseite zugewandt, eine Drainage bzw. eine Wasserableitfunktion gewährleistet ist, so dass sich anstauendes Wasser auf dem Flachdach vermieden werden kann.

Vorzugsweise weist die, insbesondere als Flachdachbahn und/oder Abdichtungsfolie ausgebildete, Baufolie einen S_{d}-Wert von größer gleich 2 m, bevorzugt von größer als 50 m, weiter bevorzugt von 50 bis 2500 m, auf, wobei der vorgenannte S_{d}-Wert zumindest im nichtüberlappten Bereich von Baufolienstreifen verwirklicht ist. Der S_{d}-Wert beschreibt die wasserdampfdiffusionsäquivalente Luftschichtdicke und ist ein Maß für den Widerstand, den eine Bauteilschicht dem Durchgang von Wasserdampf entgegensetzt. Bei einem S_{d}-Wert von größer oder gleich 0,5 m ist nach DIN 4108-3 (Stand Dezember 2018) eine diffusionshemmende und/oder dampfbremsende Schicht gewährleistet, insbesondere wobei ab einem S_{d}-Wert von größer oder gleich 1500 m eine diffusionsdichte und/oder dampfsperrende Schicht gewährleistet ist.

Des Weiteren kann die als Fassadenbahn ausgebildete Baufolie windbremsend, wasserdicht, UV-beständig und/oder diffusionsoffen ausgebildet sein, insbesondere wobei die Baufolie zudem auch als Dämmschutzbahn ausgebildet sein kann.

Vorzugsweise ist die als Flachdachbahn ausgebildete Baufolie als, insbesondere selbstklebende, Bitumenbahn und/oder Dachabdichtungsbahn ausgebildet.

Ferner kann die Baufolie als Dampfbremse und/oder Dampfsperre ausgebildet sein, insbesondere wobei die Baufolie diffusionsdicht, diffusionshemmend, wasserdampfbremsend, wasserdampfsperrend und/oder luftdicht, vorzugsweise wasserdicht, ausgebildet ist.

Insbesondere weist die Funktionsschicht und/oder die, insbesondere als Unterdachbahn ausgebildete, Baufolie einen S_{d}-Wert von kleiner gleich 0,5 m, bevorzugt von 0,01 bis 0,5 m, weiter bevorzugt von 0,01 bis 0,1 m, auf, wobei der vorgenannte S_{d}-Wert zumindest im nichtüberlappten Bereich von Baufolienstreifen verwirklicht ist. Bei einem S_{d}-Wert von kleiner oder gleich 0,5 m ist nach DIN 4108-3 (Stand Dezember 2018) eine diffusionsoffene Schicht gewährleistet.

Darüber hinaus ist bei einer weiteren bevorzugten Ausführungsform die Vliesschicht als thermisch verfestigte und/oder nadel- und/oder nassstrahlverfestigte Vliesschicht ausgebildet. Zur Verfestigung der Vliesschicht kann insbesondere eine Bestrahlung mit Wasserstrahlen oder ein Vernadeln vorgesehen sein, insbesondere wobei eine Mehrzahl von den Wasserstrahlen zur Verfügung stellende und voneinander beabstandete Verteiler vorgesehen sein kann. Sowohl die Vernadelung als auch die Wasserstrahlverfestigung zählen zu mechanischen Verfestigungsmethoden bei der Vliesstoffherstellung.

Alternativ oder zusätzlich kann als Vliesschicht ein polyolefinisches Vlies, ein Polyestervlies, ein Naturfaservlies, ein Polypropylen-Spinnvlies, ein Polyamid-Vlies, ein Polylactide-Vlies (PLA-Vlies) und/oder ein Stapelfaservlies und/oder ein engmaschiges Gewirke vorgesehen sein.

Ganz besonders bevorzugt ist die Trägerschicht als Vliesschicht ausgebildet. Letztlich versteht es sich, dass auch die Trägerschicht wenigstens eine der vorgenannten Ausbildungsformen der Vliesschicht aufweisen kann.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehung.

Es zeigt:
- Fig. 1: eine schematische Darstellung einer erfindungsgemäßen Sensorsystemanordnung,
- Fig. 2: eine schematische Darstellung einer weiteren Ausführungsform einer erfindungsgemäßen Sensorsystemanordnung,
- Fig. 3: eine schematische Darstellung einer weiteren Ausführungsform einer erfindungsgemäßen Sensorsystemanordnung,
- Fig. 4: eine schematische Darstellung einer weiteren Ausführungsform einer erfindungsgemäßen Sensorsystemanordnung,
- Fig. 5: eine schematische Darstellung der erfindungsgemäßen Informationsübertragung durch die und/oder an die Sender- und/oder Empfängereinrichtung,
- Fig. 6: eine schematische Darstellung einer weiteren Ausführungsform der erfindungsgemäßen Informationsübertragung durch die und/oder an die Sender- und/oder Empfängereinrichtung,
- Fig. 7: eine schematische perspektivische Darstellung der Anordnung der erfindungsgemäßen Sensorsystemanordnung auf einer Trägerschicht,
- Fig. 8: eine schematische Darstellung der erfindungsgemäßen drahtlosen und/oder kontaktlosen Energieübertragung,
- Fig. 9: eine schematische Darstellung der erfindungsgemäßen induktiven Energieübertagung,
- Fig. 10: eine schematische perspektivische Darstellung der erfindungsgemäßen Verwendung der Sensorsystemanordnung,
- Fig. 11: eine schematische perspektivische Darstellung einer weiteren Ausführungsform der erfindungsgemäßen Verwendung der Sensorsystemanordnung,
- Fig. 12: eine schematische perspektivische Darstellung einer weiteren Ausführungsform der erfindungsgemäßen Verwendung der Sensorsystemanordnung und
- Fig. 13: eine schematische perspektivische Darstellung einer erfindungsgemäßen Verbundfolie.

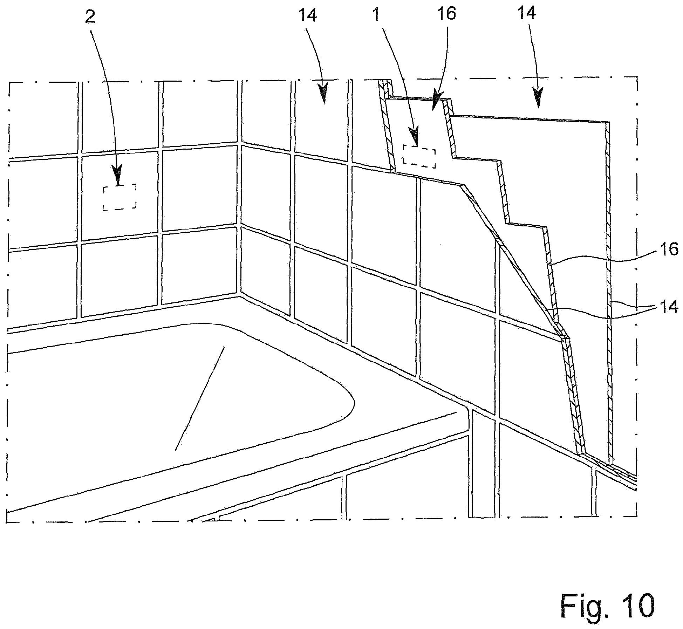

Fig. 10 zeigt die Verwendung einer Sensorsystemanordnung 1 im Baubereich und/oder Baugewerbe. In Fig. 10 ist die Verwendung der Sensorsystemanordnung 1 in einer Nasszelle - das heißt im dargestellten Ausführungsbeispiel in einem Badezimmer - gezeigt. Aber auch weitere Verwendungen im Baugewerbe und/oder Baubereich sind denkbar.

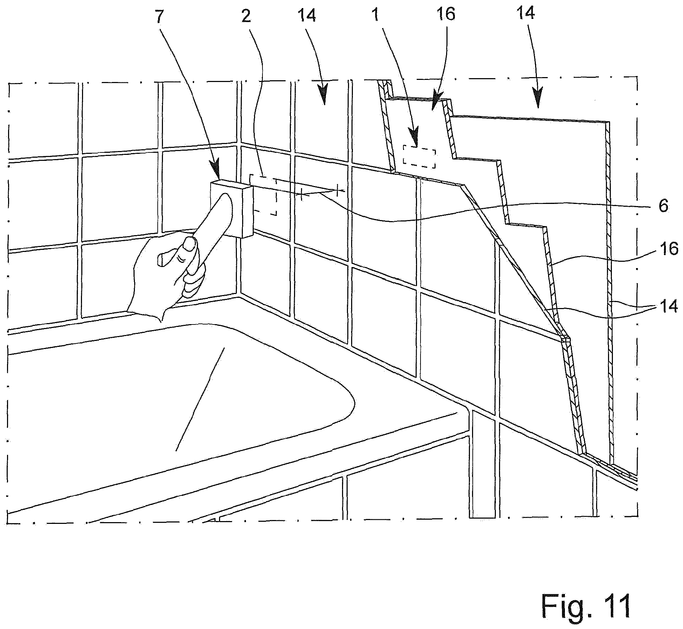

In den in den Fig. 10 und 11 gezeigten Ausführungsformen ist die Sensorsystemanordnung 1 an der Unterseite der Verbundfolie 16, die den Fliesen abgewandt ist, angeordnet.

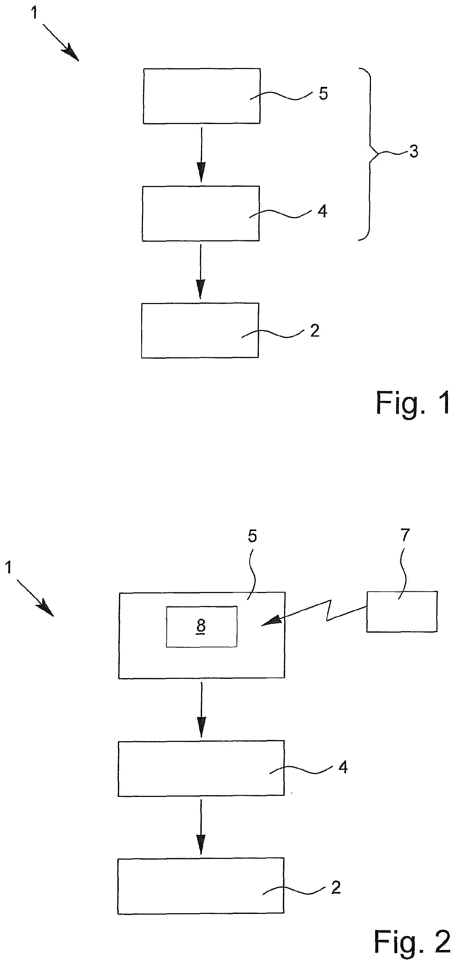

Fig. 1 zeigt, dass die Sensorsystemanordnung 1 wenigstens ein Sensorelement 2 aufweist. Das Sensorelement 2 ist zur Detektion wenigstens einer physikalischen und/oder chemischen Größe und/oder zur Detektion der stofflichen Beschaffenheit seiner Umgebung ausgebildet. Ferner weist die Sensorsystemanordnung 1 eine elektrische Energieversorgungseinrichtung 3 auf. Die elektrische Energieversorgungseinrichtung 3 kann zur elektrischen Energie und/oder elektrischen Spannungsversorgung des Sensorelementes 2 ausgebildet sein.

Zudem zeigt Fig. 1, dass die elektrische Energieversorgungseinrichtung 3 ein elektrisches Energiespeichermittel 4 sowie ein drahtlos und/oder kontaktlos aufladbares Energieempfangsmittel 5 aufweist. Das Energieempfangsmittel 5 kann zur Energieaufnahme ausgehend von einer externen Energiesendereinrichtung 7 ausgebildet sein.

Ferner zeigt Fig. 1, dass das Energieempfangsmittel 5 elektrisch mit dem Energiespeichermittel 4 derart verbunden ist, dass die durch die drahtlose und/oder kontaktlose Energieübertragung aufgenommene, insbesondere elektrische, Energie von dem Energieempfangsmittel 5 an das Energiespeichermittel 4 übertragbar ist. Zudem ist die elektrische Energie in dem Energiespeichermittel 4 speicherbar und von dem Energiespeichermittel 5 elektrisch an das Sensorelement 2 übertragbar.

Durch die Verwendung der Sensorsystemanordnung 1 im Baubereich und/oder Baugewerbe kann ein Aufladen des Energiespeichermittels 4 durch das Energieempfangsmittel 5 erfolgen, ohne dass das Energiespeichermittel 4 und/oder das Energieempfangsmittel 5 elektrisch mit einer elektrischen Leitung kontaktiert werden muss. Im konkreten Einbauzustand bedeutet dies beispielsweise, dass bei einer Verwendung gemäß Fig. 10 die Fliesen, die oberseitig auf oder vor der Sensorsystemanordnung 1 angeordnet sind, nicht zur elektrischen Energieversorgung des Sensorelementes 2 entfernt werden müssen.

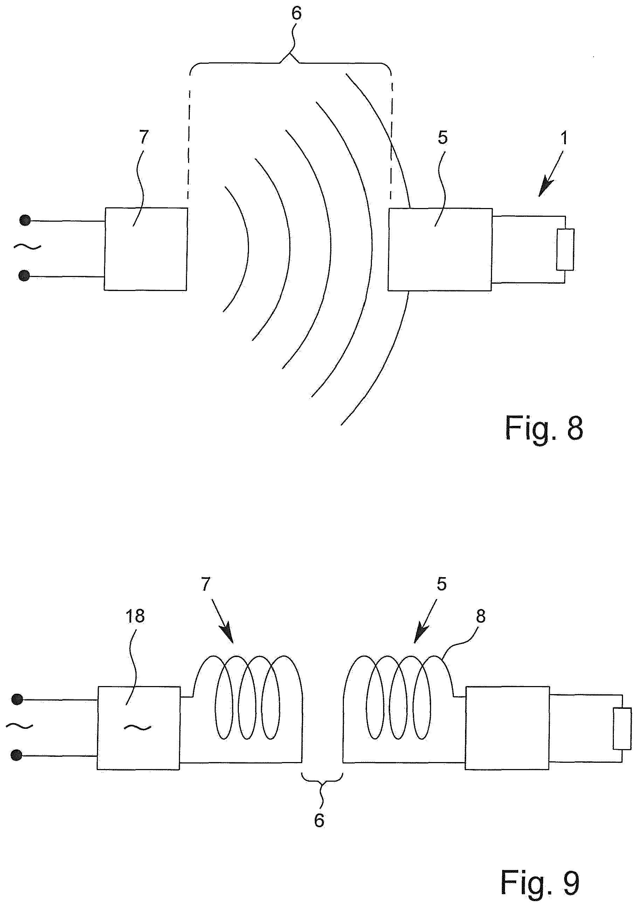

Fig. 8 zeigt schematisch die drahtlose und/oder kontaktlose Energieübertragung an das Energieempfangsmittel 5.

Fig. 9 zeigt, dass zur drahtlosen und/oder kontaktlosen Energieübertragung eine induktive Energieübertragung vorgesehen ist. Letztlich wird bei der induktiven Energieübertragung durch Induktion die Energie von der Energiesendereinrichtung 7 an das Energieempfangsmittel 5 übertragen. Hierfür können beispielsweise Spulen verwendet werden.

Bei der in Fig. 9 dargestellten Ausführungsform ist der Energiesendereinrichtung 7 ein Oszillator 18 zugeordnet, der elektrisch mit einer Induktionssenderspule 8 verbunden ist. Das Energieempfangsmittel 5 weist eine Induktionsempfängerspule 8 auf, die über Induktion Energie von der Senderspule aufnehmen kann. Letztlich kann das Energieempfangsmittel 5 derart ausgebildet sein, dass es drahtlos und/oder kontaktlos aufladbar ist. Eine derartige kontaktlose Aufladung ist beispielsweise in Fig. 11 gezeigt. Nicht dargestellt ist, dass das Sensorelement 2 über das Energiespeichermittel 4 mittels des Energieempfangsmittels 5 mit elektrische Energie versorgbar ist, die von der Energiesendereinrichtung 7 übertragen werden kann.

Des Weiteren zeigt Fig. 8, dass die drahtlose und/oder kontaktlose Energieübertragung der Energiesendereinrichtung 7 an das Energieempfangsmittel 5 im Nahfled vorgesehen ist. Das Nahfeld zeichnet sich insbesondere dadurch aus, dass der Abstand 6 zwischen einer die elektrische Energie aussendenden Energiesendereinrichtung 7 und dem Energieempfangsmittel 5 kleiner als 30 cm und/oder größer als 0,1 cm und/oder zwischen 0,1 cm bis 30 cm liegt. Insbesondere kann der Abstand 6 kleiner als 5 cm und/oder größer als 2 cm und/oder zwischen 1 cm bis 10 cm liegen.

Die induktive Kopplung zwischen der Energiesendereinrichtung 7 und der Energieempfangseinrichtung 5 kann auf, vorzugsweise internationalen, Standards und/oder Normen basieren. Beispielsweise kann die induktive Kopplung auf dem Qi-Standard basieren.

Fig. 2 zeigt, dass das Sensorelement 2 durch die von dem Energiespeichermittel 4 übertragene elektrische Energie versorgbar ist. Die übertragene elektrische Energie von dem Energiespeichermittel 4 stammt letztlich aus der drahtlosen und/oder kontaktlosen Energieübertragung der Energiesendereinrichtung 7.

Insbesondere ist das Sensorelement 2 ausschließlich durch die von dem Energiespeichermittel 4 übertragene elektrische Energie und/oder Spannung versorgbar.

Ferner zeigt Fig. 2, dass das Energieempfangsmittel 5 eine Induktionsempfängerspule 8 aufweist.

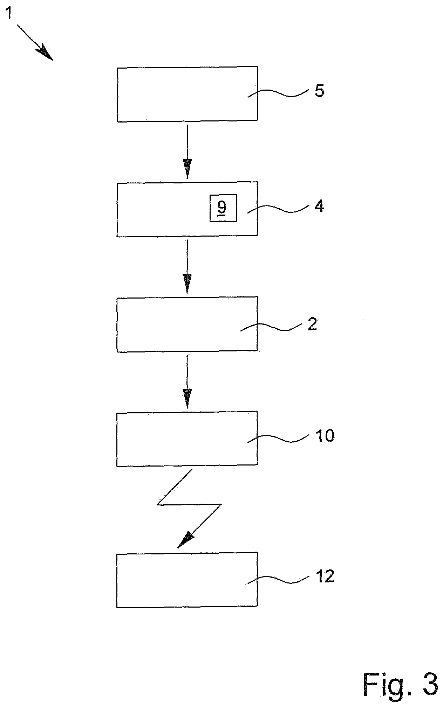

Fig. 3 zeigt, dass das Energiespeichermittel 4 einen Akkumulator 9 aufweist. Der Akkumulator 9 kann flexibel und/oder wiederaufladbar ausgebildet sein. Insbesondere besteht das Energiespeichermittel 4 aus einem Akkumulator 9. Alternativ oder zusätzlich kann das Energiespeichermittel 4 eine Batterie aufweisen und/oder daraus bestehen.

Zudem zeigt Fig. 3, dass die Sensorsystemanordnung 1 eine dem Sensorelement 2 zugeordnete Sender- und/oder Empfängereinrichtung 10 aufweist. Die Sender- und/oder Empfängereinrichtung 10 kann derart mit dem Sensorelement 2 verbunden sein, dass ausgehend von dem Sensorelement 2 die durch das Sensorelement 2 erfassten Informationen an die Sender- und/oder Empfängereinrichtung 10 übertragbar sind. Insbesondere kann durch das Sensorelement 2 die Sender- und/oder Empfängereinrichtung 10 mit elektrischer Energie, die vorzugsweise aus der drahtlosen und/oder kontaktlosen Energieübertragung stammt, versorgt werden.

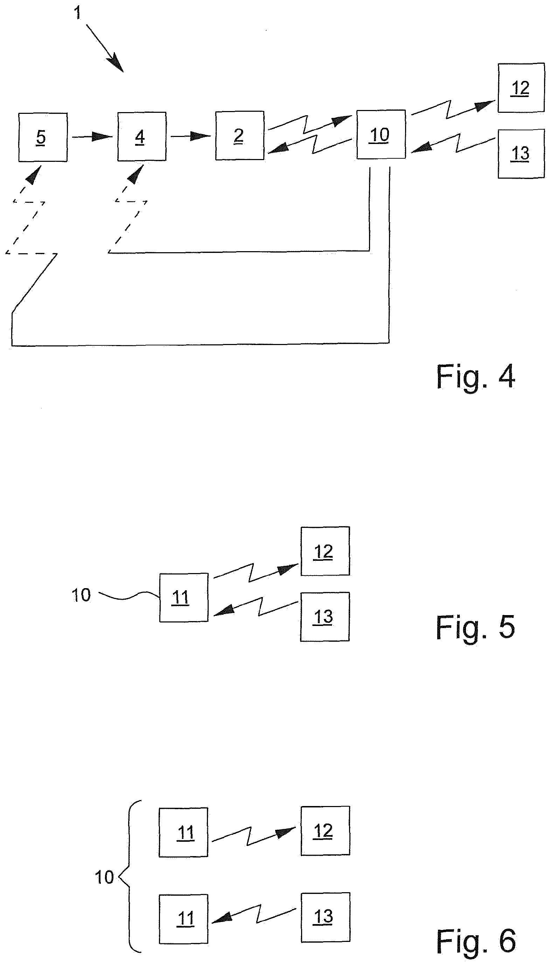

Die Sender- und/oder Empfängereinrichtung 10 kann wenigstens eine Antenne 11 aufweisen, wie dies beispielsweise die Fig. 5 und 6 zeigen. Die Antenne 11 kann im Hochfrequenz-Bereich elektrische magnetische Strahlung aussenden und/oder empfangen. Als Hochfrequenz-Bereich gilt insbesondere ein Frequenz-Bereich von über 9 kHz bis zum langwelligen Licht.

Darüber hinaus zeigt Fig. 3, dass die durch das Sensorelement 2 erfassten Informationen von der Sender- und/oder Empfängereinrichtung 10 an eine externe Empfangseinrichtung 12 übertragbar sind. Die vorgenannte Informationsübertragung kann insbesondere drahtlos und/oder kontaktlos erfolgen.

Fig. 5 zeigt, dass die Sender- und/oder Empfängereinrichtung 10 sowohl zum Senden als auch zum Empfangen von Informationen, vorzugsweise drahtlos, ausgebildet ist. Hierfür weist die Sender- und/oder Empfängereinrichtung 10 eine Antenne 11 auf.

Ferner zeigt Fig. 5, dass die Sender- und/oder Empfängereinrichtung 10 auch Informationen von einer externen Sendereinrichtung 13 empfangen kann. Diese Informationen können an das Sensorelement 2 übertragen werden, wie aus Fig. 4 ersichtlich.

Bedarfsweise kann alternativ oder zusätzlich eine Informationsübertragung der von der externen Sendereinrichtung 13 gesendeten Informationen mittels der Sender- und/oder Empfängereinrichtung 10 an das Energiespeichermittel 4 und/oder das Energieempfangsmittel 5 und/oder an weitere Komponenten der Sensorsystemanordnung 1 erfolgen. Durch die übertragbaren der Informationen der externen Sendereinrichtung 13 kann/können vorzugsweise das Sensorelement 2, das Energiespeichermittel 4 und/oder das Energieempfangsmittel 5 und/oder weitere Komponenten der Sensorsystemanordnung 1 gesteuert und/oder regelbar werden. Insbesondere kann das Sensorelement 2 durch entsprechende Befehle der externen Sendereinrichtung 13 derart aktiviert werden, dass es zum einen die zu erfassende Größe misst und die somit erfassten Informationen anschließend über die Sender- und/oder Empfängereinrichtung 10 an die externe Empfangseinrichtung 12 überträgt.

Fig. 6 zeigt, dass jeweils zur Informationsübertragung und zum Empfangen von Informationen eine Antenne 11 vorgesehen ist, so dass die Sender- und/oder Empfängereinrichtung 10 zwei Antennen 11 aufweist.

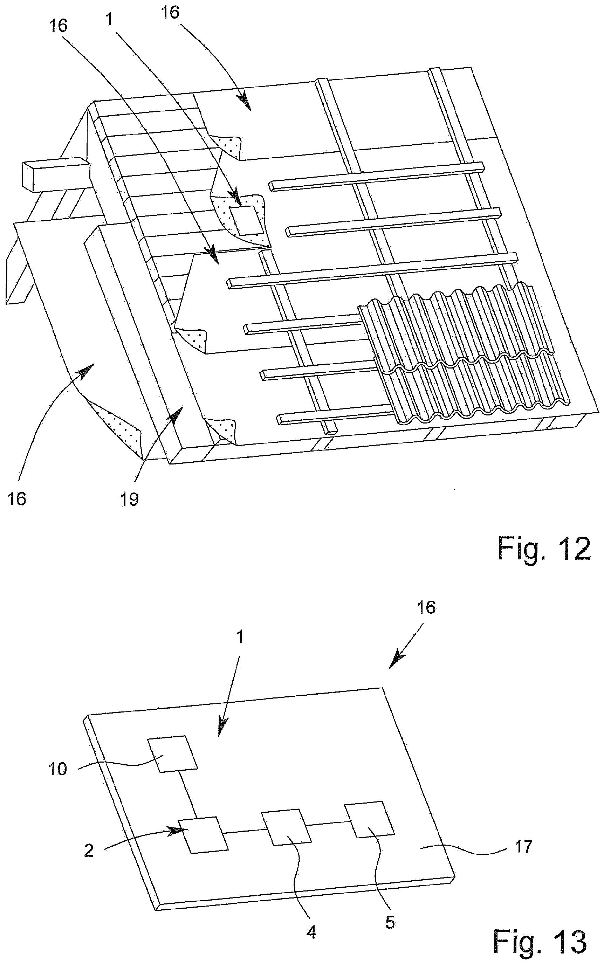

Aus den Fig. 10 bis 12 ist ersichtlich, dass die Sensorsystemanordnung 1 zwischen zwei Schichten 14 angeordnet ist. Fig. 10 zeigt, dass eine Schicht 14 letztlich der Untergrund, beispielsweise eine Wand, sein kann. Fig. 12 zeigt, dass die Schichten 14 durch verschiedene Schichten 14 eines Daches gebildet sein können. Die Sensorsystemanordnung 1 ist zumindest mit einer Schicht 14 fest und/oder nicht zerstörungsfrei trennbar verbunden. Vorzugsweise kann ohne Zerstörung wenigstens einer Schicht 14 keine elektrische Kontaktierung über elektrische Leitungen der Sensorsystemanordnung 1 und/oder des Sensorelementes 2 erfolgen. Auch eine Aufladung des Energiespeichermittels 4 über eine elektrische Leitung ist im verbauten Zustand der Sensorsystemanordnung 1 gemäß dem in Fig. 10 dargestellten Ausführungsbeispiel nicht zerstörungsfrei möglich.

Fig. 12 zeigt, dass die Sensorsystemanordnung 1 auf einer Dachbahn angeordnet sein kann. Die Sensorsystemanordnung 1 kann somit zwischen einer Dämmplatte 19 und den oberseitigen Dachziegeln angeordnet sein. Fig. 12 zeigt weiter, dass die Sensorsystemanordnungen 1 auf der dem Gebäudeinneren und der Dämmplatte 19 zugewandten Unterseite der Verbundfolie 16 angeordnet ist.

Ferner kann die Sensorsystemanordnung 1 auch auf einer Verbundfolie 16, die beispielsweise dem Gebäudeinneren zugewandt ist, und/oder oberseitig - der Witterungsseite zugewandt - an eine Dämmplatte 19 angeordnet sein. Grundsätzlich wäre auch eine Anordnung der Sendersystemanordnung 1 auf und/oder in der Dämmplatte 19 möglich.

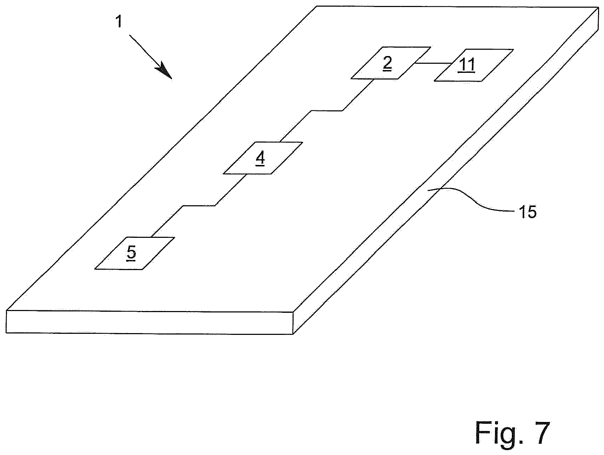

Fig. 7 zeigt, dass Bestandteile der Sensorsystemanordnung 1 auf eine Trägerschicht 15 aufgedruckt sein können. Als Trägerschicht 15 kann letztlich eine Verbundfolie 16 und/oder eine Folie 17 der Verbundfolie 16, wie in Fig. 13 dargestellt, vorgesehen sein, die zur Verwendung im Baubereich und/oder Baugewerbe ausgebildet ist. Fig. 7 zeigt weiter, dass die Energieversorgungseinrichtung 3, das Sensorelement 2, das Energiespeichermittel 4 und die Antenne 11 auf eine Trägerschicht 15 aufgedruckt worden sind.

In weiteren, nicht dargestellten Ausführungsformen ist vorgesehen, dass die Energieversorgungseinrichtung 3, das Sensorelement 2, das Energiespeichermittel 4, die Sender- und/oder Empfängereinrichtung 10, der Akkumulator 9, die Antenne 11, die Induktionsempfängerspule 8 und/oder das Energieempfangsmittel 5 auf eine Trägerschicht 15 aufgedruckt worden sind. Die vorgenannten Komponenten können derart auf die Trägerschicht 15 aufgedruckt werden, dass die Trägerschicht 15 insgesamt flexibel und/oder elastisch und/oder biegbar ist. Auch die Trägerschicht 15 kann flexibel und/oder elastisch und/oder biegbar ausgebildet sein.

Nicht dargestellt ist, dass die Sendersystemanordnung 1, die Energieversorgungseinrichtung 3, das Sensorelement 2, das Energiespeichermittel 4, die Sender- und/oder Empfängereinrichtung 10, der Akkumulator 9, die Induktionsempfängerspule 8, die Antenne 11 und/oder das Energieempfangsmittel 5 mittels einer elektrolythaltigen und/oder Metall aufweisenden und/oder einer auf elektrisch leitfähigen Polymeren basierenden bzw. aufweisenden Tinte bedruckt worden sind.

Ferner ist nicht dargestellt, dass als Sensorelement 2 ein Feuchtesensor zur Detektion von Feuchtigkeit und/oder ein Temperatur-Sensor vorgesehen ist.

Fig. 13 zeigt eine Verbundfolie 16 mit einer Sensorsystemanordnung 1 nach einer der zuvor beschriebenen Ausführungsformen und mit wenigstens einer Folie 17. Die Sensorsystemanordnung 1 ist fest mit der Folie 17 verbunden.

Die Verbundfolie 16 kann zur Verwendung als Baufolie und/oder zur Verwendung als Abdichtungsfolie, bevorzugt in einer Nasszelle, und/oder zur Verwendung im Baubereich und/oder Baugewerbe vorgesehen sein.

Die Verbundfolie 16 kann wasserdampfdurchlässig, diffusionsoffen, wasserdicht, dampfsperrend, als Dampfbremse und/oder diffusionsdicht ausgebildet sein. Letztlich werden die vorgenannten Eigenschaften der Folie 17 und/oder der Verbundfolie 16 jeweils für sich oder in beliebiger Kombination in Abhängigkeit des Einsatzzweckes im Baubereich und/oder Baugewerbe gewählt. Derzeit sind unterschiedliche Baufolien und/oder Abdichtungsfolien und/oder Dachbahnen, insbesondere Unterdachbahnen und/oder Unterspannbahnen, bekannt, die sich voneinander durch unterschiedliche Eigenschaften, insbesondere in Abhängigkeit des jeweiligen Verwendungszweckes, unterscheiden.

### Bezugszeichenliste:

- 1: Sensorsystemanordnung
- 2: Sensorelement
- 3: elektrische Energieversorgungseinrichtung
- 4: elektrisches Energiespeichermittel
- 5: Energieempfangsmittel
- 6: Abstand
- 7: Energiesendereinrichtung
- 8: Induktionsempfängerspule
- 9: Akkumulator
- 10: Sender- und/oder Empfängereinrichtung
- 11: Antenne
- 12: externe Empfangseinrichtung
- 13: externe Sendeeinrichtung
- 14: Schicht
- 15: Trägerschicht
- 16: Verbundfolie
- 17: Folie
- 18: Oszillator
- 19: Dämmplatte

## Patentansprüche

1. Verwendung einer Sensorsystemanordnung (1) im Baubereich und/oder Baugewerbe, wobei die Sensorsystemanordnung (1) wenigstens ein Sensorelement (2) zur Detektion wenigstens einer physikalischen und/oder chemischen Größe und/oder zur Detektion der stofflichen Beschaffenheit seiner Umgebung und eine elektrische Energieversorgungseinrichtung (3) aufweist, wobei die elektrische Energieversorgungseinrichtung (3) ein elektrisches Energiespeichermittel (4) und ein drahtlos und/oder kontaktlos aufladbares Energieempfangsmittel (5) aufweist, wobei das Energieempfangsmittel (5) elektrisch mit dem Energiespeichermittel (4) derart verbunden ist, dass die durch die drahtlose und/oder kontaktlose Energieübertragung aufgenommene Energie von dem Energieempfangsmittel (5) an das Energiespeichermittel (4) übertragbar ist, wobei elektrische Energie in dem Energiespeichermittel (4) speicherbar und von dem Energiespeichermittel (4) elektrisch an das Sensorelement (2) übertragbar ist, wobei die Sensorsystemanordnung (1) bei der Verwendung im Baubereich und/oder Baugewerbe zwischen zwei Schichten (14) angeordnet ist und wobei die Sensorsystemanordnung (1) zumindest mit einer von einer Verbundfolie (16) umfassten Folie (17) fest und/oder nicht zerstörungsfrei trennbar verbunden ist.

2. Verwendung nach Anspruch 1, **dadurch gekennzeichnet, dass** zur drahtlosen und/oder kontaktlosen elektrischen Energieübertragung eine induktive Energieübertragung vorgesehen ist und/oder dass eine drahtlose und/oder kontaktlose elektrische Energieübertragung im Nahfeld vorgesehen ist, insbesondere wobei der Abstand (6) zwischen einer die elektrische Energie aussendenden Energiesendereinrichtung (7) und dem Energieempfangsmittel (5) kleiner als 30 cm, bevorzugt kleiner 10 cm, weiter bevorzugt kleiner als 5 cm, und/oder größer als 0,1 cm, bevorzugt größer als 1 cm, weiter bevorzugt größer als 2 cm, und/oder zwischen 0,1 cm bis 30 cm, bevorzugt zwischen 1 cm bis 10 cm, weiter bevorzugt zwischen 2 cm bis 5 cm, liegt.

3. Verwendung nach Anspruch 1 oder 2, **dadurch gekennzeichnet, dass** das Energieempfangsmittel (5) eine Induktionsempfängerspule (8) aufweist und/oder dass das Energieempfangsmittel (5) derart ausgebildet ist, dass es drahtlos und/oder kontaktlos aufladbar ist, und/oder
dass das Sensorelement (2) durch die von dem Energiespeichermittel (4) übertragene elektrische Energie, vorzugsweise ausschließlich, versorgbar ist.

4. Verwendung nach einem der vorhergehenden Ansprüche, **dadurch gekennzeichnet, dass** das Energiespeichermittel (4) einen, vorzugsweise flexiblen und/oder wiederaufladbaren, Akkumulator (9) aufweist, insbesondere daraus besteht.

5. Verwendung nach einem der vorhergehenden Ansprüche, **dadurch gekennzeichnet, dass** die Sensorsystemanordnung (1) eine dem Sensorelement (2) zugeordnete Sender- und/oder Empfängereinrichtung (10), vorzugsweise eine, bevorzugt im Hochfrequenz-Bereich elektromagnetische Strahlung aussendende und/oder empfangende, Antenne (11), aufweist, insbesondere wobei die durch das Sensorelement (2) erfassten Informationen, vorzugsweise drahtlos, durch die Sender- und/oder Empfängereinrichtung (10), insbesondere an eine externe Empfangseinrichtung (12), übertragbar sind und/oder wobei die Sender- und/oder Empfängereinrichtung (10), vorzugsweise drahtlos, Informationen, insbesondere von einer externen Sendeeinrichtung (13), empfängt und, vorzugsweise, an das Sensorelement (2), das Energiespeichermittel (4) und/oder das Energieempfangsmittel (5), bevorzugt zur Steuerung und/oder Regelung des Sensorelementes (2), des Energiespeichermittels (4) und/oder des Energieempfangsmittels (5), überträgt.

6. Verwendung nach einem der vorhergehenden Ansprüche, **dadurch gekennzeichnet, dass** die Sensorsystemanordnung (1), die Energieversorgungseinrichtung (3), das Sensorelement (2), das Energiespeichermittel (4), die Sender- und/oder Empfängereinrichtung(10), der Akkumulator (9), die Antenne (11), die Induktionsempfängerspule (8) und/oder das Energieempfangsmittel (5) auf wenigstens eine, vorzugsweise flexible und/oder elastische und/oder biegbare, Trägerschicht (15) aufgedruckt ist/sind.

7. Verwendung nach einem der vorhergehenden Ansprüche, **dadurch gekennzeichnet, dass** die Sensorsystemanordnung (1), die Energieversorgungseinrichtung (3), das Sensorelement (2), das Energiespeichermittel (4), die Sender- und/oder Empfängereinrichtung (10), der Akkumulator (9), die Antenne (11), die Induktionsempfängerspule (8) und/oder das Energieempfangsmittel (5) mittels einer elektrolythaltigen und/oder Metall und/oder wenigstens ein, insbesondere elektrisch, leitfähiges Polymer aufweisenden Tinte gedruckt ist/sind.

8. Verwendung nach einem der vorhergehenden Ansprüche, **dadurch gekennzeichnet, dass** als Sensorelement (2) ein Feuchtesensor zur Detektion von Feuchtigkeit und/oder ein Temperatur-Sensor vorgesehen ist.

9. Verbundfolie (16) zur Verwendung als Baufolie und/oder zur Verwendung als Abdichtungsfolie, bevorzugt in einer Nasszelle, mit einer Sensorsystemanordnung (1), wobei die Sensorsystemanordnung wenigstens ein Sensorelement (2) zur Detektion wenigstens einer physikalischen und/ oder chemischen Größe und/oder zur Detektion der stofflichen Beschaffenheit seiner Umgebung und eine elektrische Energieversorgungseinrichtung (3) aufweist, wobei die elektrische Energieversorgungseinrichtung (3) ein elektrisches Energiespeichermittel (4) und ein drahtlos und/oder kontaktlos aufladbares Energieempfangsmittel (5) aufweist, wobei das Energieempfangsmittel (5) elektrisch mit dem Energiespeichermittel (4) derart verbunden ist, dass die durch die drahtlose und/oder kontaktlose Energie- übertragung aufgenommene Energie von dem Energieempfangsmittel (5) an das Energiespeichermittel (4) übertragbar ist, wobei elektrische Energie in dem Ener- giespeichermittel (4) speicherbar und von dem Energiespeichermittel (4) elektrisch an das Sensorelement (2) übertragbar ist, wobei die Verbundfolie (16) wenigstens eine Folie (17) umfasst, wobei die Sensorsystemanordnung (1) mit der Folie (17) fest verbunden ist.

## Claims

1. Use of a sensor system arrangement (1) in the construction sector and/or construction industry, the sensor system arrangement (1) having at least one sensor element (2) for detecting at least one physical and/or chemical variable and/or for detecting the material composition of its environment and an electrical energy supply device (3), wherein the electrical energy supply device (3) comprises an electrical energy storage means (4) and an energy receiving means (5) which can be charged in a wireless and/or contactless manner, wherein the energy receiving means (5) is electrically connected to the energy storage means (4) in such a manner that the energy received by the wireless and/or contactless energy transmission can be transmitted from the energy receiving means (5) to the energy storage means (4), wherein electrical energy can be stored in the energy storage means (4) and can be electrically transmitted from the energy storage means (4) to the sensor element (2), wherein the sensor system arrangement (1) is arranged between two layers (14) when used in the construction sector and/or construction industry, and wherein the sensor system arrangement (1) is firmly and/or non-destructively separably connected to at least one foil (17) comprised by a composite foil (16).

2. Use according to claim 1, **characterized in that** inductive energy transmission is provided for wireless and/or contactless electrical energy transmission and/or **in that** wireless and/or contactless electrical energy transmission is provided in the near field, in particular wherein the distance (6) between an energy transmitting means (7) transmitting the electrical energy and the energy receiving means (5) is less than 30 cm, preferably less than 10 cm, more preferably less than 5 cm, and/or greater than 0.1 cm, preferably greater than 1 cm, more preferably greater than 2 cm, and/or between 0.1 cm to 30 cm, preferably between 1 cm to 10 cm, more preferably between 2 cm to 5 cm.

3. Use according to claim 1 or 2, **characterized in that** the energy receiving means (5) comprises an induction receiver coil (8) and/or **in that** the energy receiving means (5) is designed to be wirelessly and/or contactlessly chargeable, and/or in that the sensor element (2) can be supplied, preferably exclusively, by the electrical energy transmitted by the energy storage means (4).

4. Use according to one of the preceding claims, **characterized in that** the energy storage means (4) comprises, in particular consists of, a preferably flexible and/or rechargeable accumulator (9).

5. Use according to one of the preceding claims, **characterized in that** the sensor system arrangement (1) has a transmitter and/or receiver device (10) assigned to the sensor element (2), preferably an antenna (11) which emits and/or receives electromagnetic radiation, preferably in the high-frequency range, in particular wherein the information detected by the sensor element (2) can be transmitted, preferably wirelessly, by the transmitter and/or receiver device (10), in particular to an external receiving device (12), and/or wherein the transmitter and/or receiver device (10) receives information, in particular from an external transmitting device (13), preferably wirelessly, and transmits it, preferably, to the sensor element (2), the energy storage means (4) and/or the energy receiving means (5), preferably for controlling and/or regulating the sensor element (2), the energy storage means (4) and/or the energy receiving means (5).

6. Use according to one of the preceding claims, **characterized in that** the sensor system arrangement (1), the energy supply device (3), the sensor element (2), the energy storage means (4), the transmitter and/or receiver device (10), the accumulator (9), the antenna (11), the induction receiver coil (8) and/or the energy receiving means (5) is/are printed on at least one, preferably flexible and/or elastic and/or bendable, carrier layer (15).

7. Use according to one of the preceding claims, **characterized in that** the sensor system arrangement (1), the energy supply device (3), the sensor element (2), the energy storage means (4), the transmitter and/or receiver device (10), the accumulator (9), the antenna (11), the induction receiver coil (8) and/or the energy receiving means (5) is/are printed by means of an ink containing electrolytes and/or metal and/or at least one, in particular electrically conductive polymer.

8. Use according to one of the preceding claims, **characterized in that** a humidity sensor for detecting humidity and/or a temperature sensor is provided as sensor element (2).

9. Composite foil (16) for use as a construction foil and/or for use as a sealing foil, preferably in a wet cell, having a sensor system arrangement (1), the sensor system arrangement having at least one sensor element (2) for detecting at least one physical and/or chemical variable and/or for detecting the material composition of its environment and an electrical energy supply device (3), the electrical energy supply device (3) having an electrical energy storage means (4) and an energy receiving means (5) which can be charged in a wireless and/or contactless manner, wherein the energy receiving means (5) is electrically connected to the energy storage means (4) in such a manner that the energy received by the wireless and/or contactless energy transmission can be transmitted from the energy receiving means (5) to the energy storage means (4), wherein electrical energy can be stored in the energy storage means (4) and can be electrically transmitted from the energy storage means (4) to the sensor element (2),, wherein the composite foil (16) comprises at least one foil (17), wherein the sensor system arrangement (1) is fixedly connected to the foil (17).

## Revendications

1. Utilisation d'un agencement de système de capteurs (1) dans le domaine du bâtiment et/ou de l'industrie du bâtiment, l'agencement de système de capteurs (1) comprenant au moins un élément de capteur (2) pour la détection d'au moins une grandeur physique et/ou chimique et/ou pour la détection de la nature matérielle de son environnement et un dispositif d'alimentation en énergie électrique (3), le dispositif d'alimentation en énergie électrique (3) comprenant un moyen d'accumulation d'énergie électrique (4) et un moyen de réception d'énergie (5) pouvant être chargé sans fil et/ou sans contact, le moyen de réception d'énergie (5) étant relié électriquement au moyen d'accumulation d'énergie (4) de telle sorte, que l'énergie absorbée par la transmission d'énergie sans fil et/ou sans contact peut être transmise du moyen de réception d'énergie (5) au moyen d'accumulation d'énergie (4), l'énergie électrique pouvant être stockée dans le moyen d'accumulation d'énergie (4) et pouvant être transmise électriquement du moyen d'accumulation d'énergie (4) à l'élément de capteur (2), l'agencement de système de capteur (1) étant disposé entre deux couches (14) lors de l'utilisation dans le domaine du bâtiment et/ou de l'industrie du bâtiment et l'agencement de système de capteur (1) étant relié de manière fixe et/ou non séparable de manière non destructive à au moins une feuille (17) comprise dans une feuille composite (16).

2. Utilisation selon la revendication 1, **caractérisée en ce qu'**une transmission d'énergie inductive est prévue pour la transmission d'énergie électrique sans fil et/ou sans contact et/ou **en ce qu'**une transmission d'énergie électrique sans fil et/ou sans contact est prévue dans le champ proche, en particulier dans laquelle la distance (6) entre un dispositif émetteur d'énergie (7) émettant l'énergie électrique et le moyen de réception d'énergie (5) est inférieure à 30 cm, de préférence inférieure à 10 cm, plus préférablement inférieure à 5 cm, et/ou supérieure à 0,1 cm, de préférence supérieure à 1 cm, plus préférablement supérieure à 2 cm, et/ou comprise entre 0,1 cm et 30 cm, de préférence entre 1 cm et 10 cm, plus préférablement entre 2 cm et 5 cm.

3. Utilisation selon la revendication 1 ou 2, **caractérisée en ce que** le moyen de réception d'énergie (5) présente une bobine de réception d'induction (8) et/ou **en ce que** le moyen de réception d'énergie (5) est conçu de telle sorte qu'il peut être rechargé sans fil et/ou sans contact, et/ou
**en ce que** l'élément capteur (2) peut être alimenté, de préférence exclusivement, par l'énergie électrique transmise par le moyen d'accumulation d'énergie (4).

4. Utilisation selon l'une des revendications précédentes, **caractérisée en ce que** le moyen d'accumulation d'énergie (4) comporte, en particulier est constitué par, un accumulateur (9), de préférence flexible et/ou rechargeable.

5. Utilisation selon l'une des revendications précédentes, **caractérisée en ce que** l'agencement de système de capteurs (1) comporte un dispositif émetteur et/ou récepteur (10) associé à l'élément de capteur (2), de préférence une antenne (11) émettant et/ou recevant un rayonnement électromagnétique, de préférence dans la plage des hautes fréquences, en particulier dans laquelle les informations saisies par l'élément de capteur (2) sont transmises, de préférence sans fil, par le dispositif émetteur et/ou récepteur (10), en particulier à un dispositif de réception externe (12), et/ou le dispositif émetteur et/ou récepteur (10) recevant, de préférence sans fil, des informations, en particulier d'un dispositif émetteur externe (13), et les transmettant, de préférence, à l'élément de capteur (2), au moyen d'accumulation d'énergie (4) et/ou au moyen de réception d'énergie (5), de préférence pour la commande et/ou la régulation de l'élément de capteur (2), du moyen d'accumulation d'énergie (4) et/ou du moyen de réception d'énergie (5).

6. Utilisation selon l'une des revendications précédentes, **caractérisée en ce que** l'agencement de système de capteurs (1), le dispositif d'alimentation en énergie (3), l'élément de capteur (2), le moyen d'accumulation d'énergie (4), le dispositif émetteur et/ou récepteur (10), l'accumulateur (9), l'antenne (11), la bobine de réception d'induction (8) et/ou le moyen de réception d'énergie (5) est/sont imprimé(s) sur au moins une couche de support (15), de préférence flexible et/ou élastique et/ou pliable.

7. Utilisation selon l'une des revendications précédentes, **caractérisée en ce que** l'agencement de système de capteurs (1), le dispositif d'alimentation en énergie (3), l'élément de capteur (2), le moyen d'accumulation d'énergie (4), le dispositif émetteur et/ou récepteur (10), l'accumulateur (9), l'antenne (11), la bobine de réception d'induction (8) et/ou le moyen de réception d'énergie (5) est/sont imprimé(s) au moyen d'une encre contenant un électrolyte et/ou présentant un métal et/ou au moins un polymère, en particulier conducteur d'électricité.

8. Utilisation selon l'une des revendications précédentes, **caractérisée en ce qu'**il est prévu comme élément de capteur (2) un capteur d'humidité pour la détection de l'humidité et/ou un capteur de température.

9. Feuille composite (16) destinée à être utilisée comme feuille de construction et/ou à être utilisée comme feuille d'étanchéité, de préférence dans une cellule humide, avec un agencement de système de capteurs (1), l'agencement de système de capteurs comprenant au moins un élément de capteur (2) pour la détection d'au moins une grandeur physique et/ou chimique et/ou pour la détection de la nature matérielle de son environnement et un dispositif d'alimentation en énergie électrique (3), le dispositif d'alimentation en énergie électrique (3) comprenant un moyen d'accumulation d'énergie électrique (4) et un moyen de réception d'énergie (5) pouvant être chargé sans fil et/ou sans contact, le moyen de réception d'énergie (5) étant relié électriquement au moyen d'accumulation d'énergie (4) de telle sorte, que l'énergie absorbée par la transmission d'énergie sans fil et/ou sans contact peut être transmise du moyen de réception d'énergie (5) au moyen d'accumulation d'énergie (4), l'énergie électrique pouvant être stockée dans le moyen d'accumulation d'énergie (4) et pouvant être transmise électriquement du moyen d'accumulation d'énergie (4) à l'élément de capteur (2), la feuille composite (16) comprenant au moins une feuille (17), l'agencement de système de capteurs (1) étant relié de manière fixe à la feuille (17).
